# EUROPÄISCHE PATENTSCHRIFT

(11) **EP 1 334 344 B1**
(45) Veröffentlichungstag und Bekanntmachung des Hinweises auf die Patenterteilung: **17.03.2010**
(21) Anmeldenummer: 01996725.6
(22) Anmeldetag: 09.11.2001
(51) Int. Cl.: G01M 3/28

(54) **EINRICHTUNG ZUM PRÜFEN AUF DICHTIGKEIT EINER DICHTANORDNUNG VON ROHREN ODER SCHACHTBAUWERKEN**
DEVICE FOR TESTING THE IMPERMEABILITY OF A SEALING ASSEMBLY OF PIPES OR SHAFT CONSTRUCTIONS
DISPOSITIF DE CONTRÔLE DE L'ÉTANCHÉITÉ D'UN SYSTEME D'ETANCHEITE DE TUYAUX OU DE CONSTRUCTIONS A PUITS

(30) Priorität: 17.11.2000 DE 10057287
(43) Veröffentlichungstag der Anmeldung: 13.08.2003
(73) Patentinhaber: Phoenix Dichtungstechnik GmbH, 99880 Waltershausen (DE)
(72) Erfinder: FAERBER, Peter, 51371 Leverkusen (DE); HÖFT, Heiko, 21435 Rosengarten (DE); SCHLAUTMANN, Frank, 48147 Münster (DE)
(74) Vertreter: Pohl, Manfred
(86) Internationale Anmeldenummer: PCT/DE2001/004190
(87) Internationale Veröffentlichungsnummer: WO 2002/040958

(56) Entgegenhaltungen:
- EP-A- 0 449 082
- DE-A- 2 550 742
- DE-A- 3 345 569
- DE-A- 3 507 909
- US-A- 5 014 743
- US-A1- 2004 207 410

## Beschreibung

Die Erfindung betrifft eine Einrichtung zum Prüfen auf Dichtigkeit einer Dichtanordnung von Rohren oder Schachtbauwerken, umfassend:
- zwei aneinanderstoßende Bauteile in Form einer Muffe und eines Spitzendes unter Bildung eines Ringspaltes; und
- einen Dichtring aus elastomerem Werkstoff, der den Ringspalt abdichtend überbrückt, umfassend wiederum einen Basisbereich, der mit wenigstens einem Verankerungsfuß ausgestattet ist, mit dessen Hilfe eine dauerhafte Befestigung in der Muffe erfolgt; sowie einen gegenüberliegenden Kontaktbereich zum Spitzende.

Eine gattungsgemäße Dichtanordnung, bei der der Dichtring fest in der Muffe verankert ist (integrierte Dichtung), wird beispielsweise in den Patentschriften DE 33 45 569 C2, DE 35 07 909 C2 und EP 0 449 082 B1 ausführlich beschrieben.

In den Offenlegungsschriften DE 25 50 742 A1 und DE 39 33 873 A1 werden Prüfeinrichtungen von Rohrverbindungen vorgestellt, bei denen die Dichtringe (Rollringe, Kompressionsdichtungen) innerhalb des Spitzendes aufgebracht sind. Dabei weist die Dichtanordnung jeweils eine innere und äußere Dichtung auf, die in einem Abstand zueinander angeordnet sind. Der dazwischen liegende Hohlraum (Prüfraum) ist über eine Anschlussleitung mit einer Druckmesseinrichtung verbunden.

Im Rahmen einer Weiterentwicklung besteht nun die Aufgabe darin, für eine gattungsgemäße Dichtanordnung, bei der der Dichtring fest in der Muffe verankert ist, eine Einrichtung zum Prüfen auf Dichtigkeit bereitzustellen, die nach der Montage von Muffe und Spitzende einfach wie auch wirtschaftlich durchzuführen ist.

Diese Aufgabe wird nun gemäß Kennzeichen des Patentanspruches 1 dadurch gelöst, dass
- der Dichtring einen ersten und zweiten Dichtbereich aufweist, wobei die beiden Dichtbereiche einen ringförmigen Prüfraum umschließen;
- der Basisbereich des Dichtringes mit einer Ringnut ausgestattet ist, die mit einem mediumdurchlässigen und/oder komprimierbaren Material vollständig ausgefüllt ist;
- umlaufend mehrere in Abständen angeordnete Bohrungen vorhanden sind, die vom Kontaktbereich des Dichtringes zur Ringnut verlaufen und dabei den Prüfraum verbinden; und dass
- wenigstens eine Anschlussleitung vorhanden ist, die mit einem Behälter verbunden ist, der wiederum mit einem Prüfmedium gefüllt ist, mit dessen Hilfe ein Druck aufbaubar ist, der die Bohrungen, die Ringnut und den Prüfraum erfasst; und die ferner mit einem Ventil sowie einem Messgerät in Verbindung steht, wobei mittels des Messgerätes Sollwertabweichungen hinsichtlich der Dichtleistung erfassbar sind.

Zweckmäßige Ausgestaltungen der erfindungsgemäßen Prüfeinrichtung sind in den Patentansprüchen 2 bis 21 genannt.

Die Erfindung wird nun anhand von Ausführungsbeispielen unter Bezugnahme auf schematische Zeichnungen erläutert. Es zeigen:
- Fig. 1: einen Axialschnitt einer Dichtanordnung eines Schachtbauwerkes, bei der der Dichtring in der Muffe verankert ist, und zwar bei einem gewinkelten Verlauf der Anschlussleitung in Richtung Schachtinneres;
- Fig. 2, 3: jeweils einen Radialschnitt einer Dichtanordnung gemäß Fig. 1 mit zwei Anordnungsvarianten der zwei Anschlussleitungen;
- Fig. 4: einen Axialschnitt einer Dichtanordnung einer Muffenrohrverbindung, bei der der Dichtring in der Muffe verankert ist, und zwar bei einem senkrechten bzw. schrägen Verlauf der Anschlussleitung in Richtung Außenbereich der Muffenrohrverbindung;
- Fig. 5: einen Radialschnitt einer Dichtanordnung gemäß Fig. 4;
- Fig. 6: eine Anschlussleitung mit Kupplungsgehäuse mit integriertem Verankerungsfuß und Markierungselement.

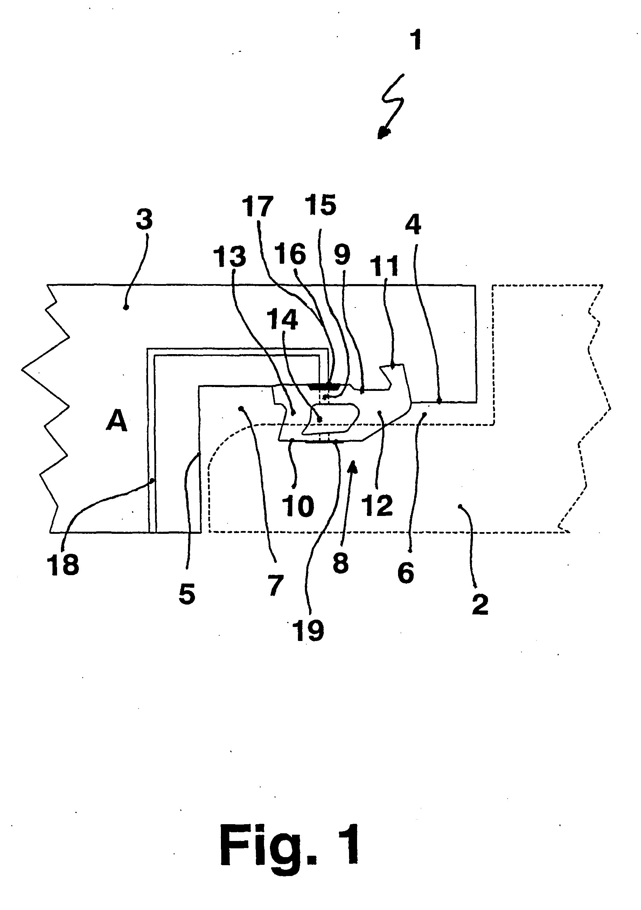

Fig. 1 zeigt eine Dichtanordnung **1,** umfassend eine Muffe **3** und ein Spitzende **2** eines Schachtbauwerkes aus Beton, wobei ein Dichtring **8** den Ringspalt **6** unter Kompression abdichtend überbrückt. Der Dichtring ist dabei mittels eines Verankerungsfußes **11** im Muffengrund **4** dauerhaft befestigt.

Der Dichtring **8** weist einen ersten und zweiten Dichtbereich **12** und **13** auf, wobei die beiden Dichtbereiche einen Prüfraum **14** umschließen. Der Basisbereich **9** des Dichtringes ist mit einer Ringnut **16** ausgestattet, die mit einem mediumdurchlässigen Material **17** vollständig ausgefüllt ist, insbesondere in Form eines.Streifens aus Moosgummi, der in die Ringnut einlegbar ist.

Ferner sind mehrere in Abständen angeordnete Bohrungen **15** vorhanden, die vom Kontaktbereich **10** des Dichtringes zur Ringnut **16** verlaufen und dabei den Prüfraum **14** verbinden. Die Ringnut **16** selbst steht wiederum mit einer Anschlussleitung **18** in Verbindung, die innerhalb der Muffe **3** gewinkelt verläuft (Leitungsbereich A), und zwar in Richtung Schachtinneres.

Die mit dem Prüfraum **14** in Verbindung stehenden Bohrungen **15** sind mit einem selbstklebenden Abdeckband **19** verschlossen, wobei das Abdeckband vor der Montage von Muffenende und Spitzende entfernt wird.

Zwischen dem zweiten Dichtbereich **13** des Dichtringes und dem Muffenspiegel **5** ist ein Freiraum **7** vorhanden, verbunden mit Verformungsmöglichkeiten des Dichtringes.

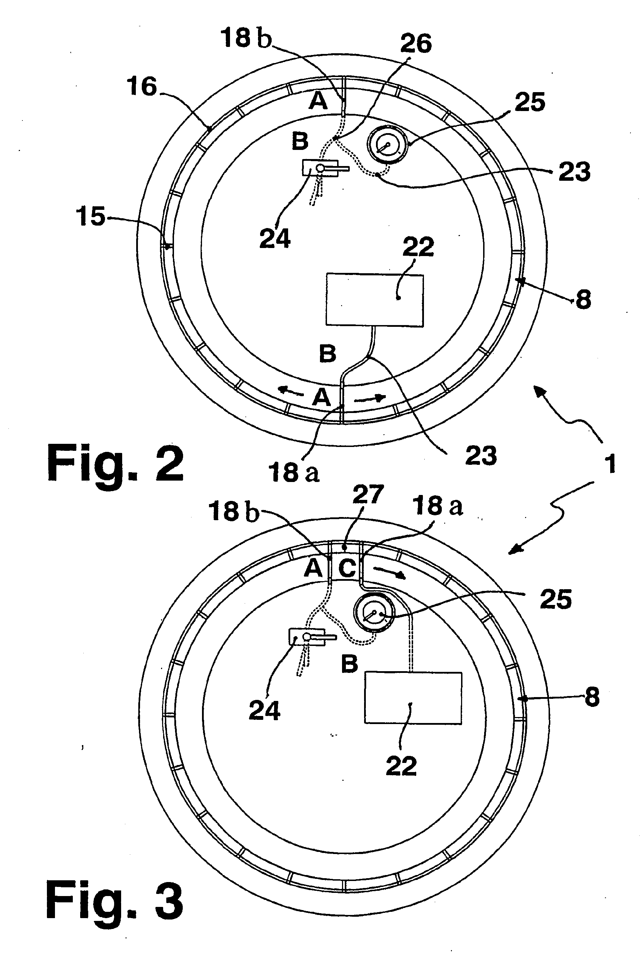

Nach Fig. 2 ist die Dichtanordnung **1** mit zwei Anschlussleitungen **18a** und **18b** versehen, wobei wiederum jede Anschlussleitung zwei Leitungsbereiche A und B umfasst. Der erste Leitungsbereich A ist dabei in der Muffe **3** integriert, und zwar mit direktem Anschluss an die Ringnut **16.** Der freie zweite Leitungsbereich B befindet sich im Schachtinneren und ist vorzugsweise ein Schlauch. Die erste Anschlussleitung **18a** kommt hier unten zum Liegen, die mittels eines Schlauches **23** mit einem Behälter **22** verbunden ist, der mit einem flüssigen Prüfmedium gefüllt ist. Die zweite Anschlussleitung **18b** ist oben angeordnet, und zwar direkt gegenüber der ersten Anschlussleitung **18a.** Diese zweite Anschlussleitung **18b** ist mittels eines Schlauches **23** mit Abzweigbereich **26** an ein Ventil **24** und an ein Messgerät **25** angeschlossen.

Beim Zulauf des Prüfmediums durch die erste Anschlussleitung **18a** entlang der Ringnut **16** in beiden Richtungen (Pfeilrichtungen) erfolgt zugleich eine Entlüftung über die zweite Anschlussleitung **18b** und das offene Ventil **24.** Sobald die Füllung der Dichtanordnung mit dem Prüfmedium abgeschlossen ist, wird das Ventil **24** geschlossen.

Mittels des Prüfmediums ist nun ein Druck aufbaubar (Druckprüfung), der die Bohrungen **15,** die Ringnut **16** und den Prüfraum **14** erfasst, wobei mittels des Messgerätes **25** Sollwertabweichungen hinsichtlich der Dichtleistungen erfassbar sind.

Die mit dem Prüfraum **14** in Verbindung stehenden Bohrungen **15** sind umlaufend in einem Abstand von etwa 100 mm angeordnet.

Nach Fig. 3 sind die beiden Anschlussleitungen **18a** und **18b** oben angeordnet und kommen dabei innerhalb des Leitungsbereiches A dicht nebeneinander zum Liegen. Der Dichtring **8** ist im Bereich C zwischen diesen beiden Anschlussleitungen mit einer Trennschicht **27** versehen, die den Prüfraum **14** und die Ringnut **16** partiell (d.h. nur im Bereich C) verschließt, so dass über die erste Anschlussleitung **18a** mit Verbindung zum Behälter **22** das Prüfmedium nur in eine Richtung (Pfeilrichtung) förderbar ist. Die Entlüftung erfolgt über die zweite Anschlussleitung **18b** bei geöffnetem Ventil **24.** Bei geschlossenem Ventil erfolgt dann wie bei Fig. 2 beschrieben die Dichtigkeitsprüfung mittels des Messgerätes **25.**

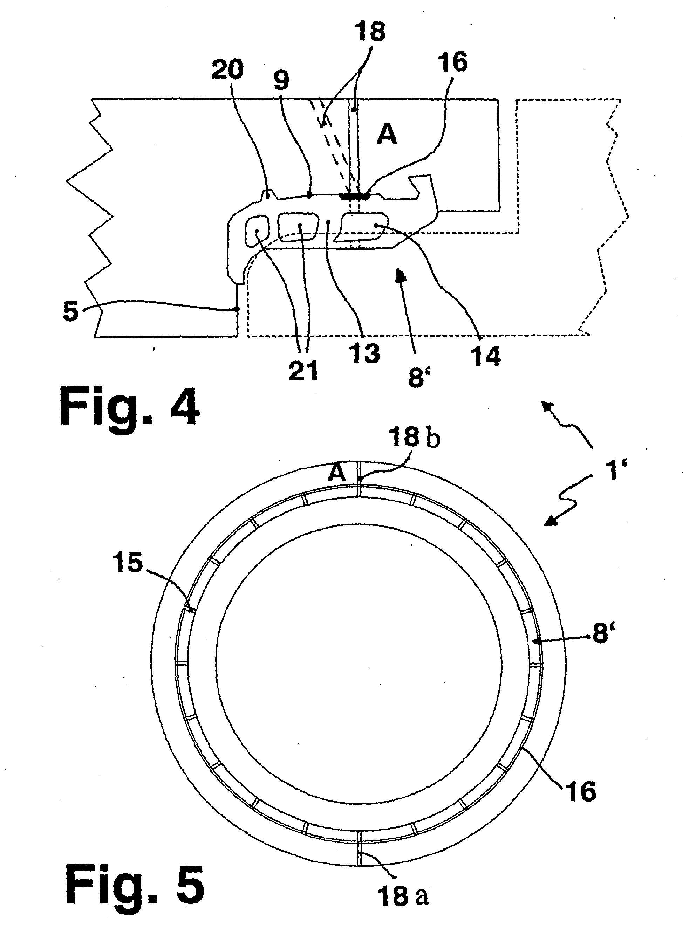

Fig. 4 zeigt eine Dichtanordnung **1'** einer Muffenrohrverbindung aus Beton, die sich gegenüber dem Ausführungsbeispiel gemäß Fig. 1 bis 3 wie folgt unterscheidet.

Der Dichtring **8'** verläuft hier bis zum Muffenspiegel **5,** wobei zwei zusätzliche Ringkanäle **21** innerhalb des zweiten Dichtbereiches **13** für die nötige Verformung sorgen. Ferner ist innerhalb des Basisbereiches **9** des Dichtringes ein weiterer Verankerungsfuß **20** vorhanden. Außerdem mündet die Anschlussleitung **18** innerhalb des Leitungsbereiches A senkrecht oder schräg (gestrichelte Linienführung) in die mit Moosgummi gefüllte Ringnut **16** ein. Der freie Leitungsbereich B wie auch der Behälter, Ventil und das Messgerät (hier nicht dargestellt) befinden sich im Außenbereich der Muffenrohrverbindung.

Nach Fig. 5 sind die beiden Anschlussleitungen **18a** und **18b** innerhalb des Leitungsbereiches A, und zwar in Form einer Bohrung oder eines integrierten Rohres, im gleichen Abstand zueinander angeordnet. Hinsichtlich des Prüfprinzips wird auf die Beschreibung der Fig. 2 verwiesen.

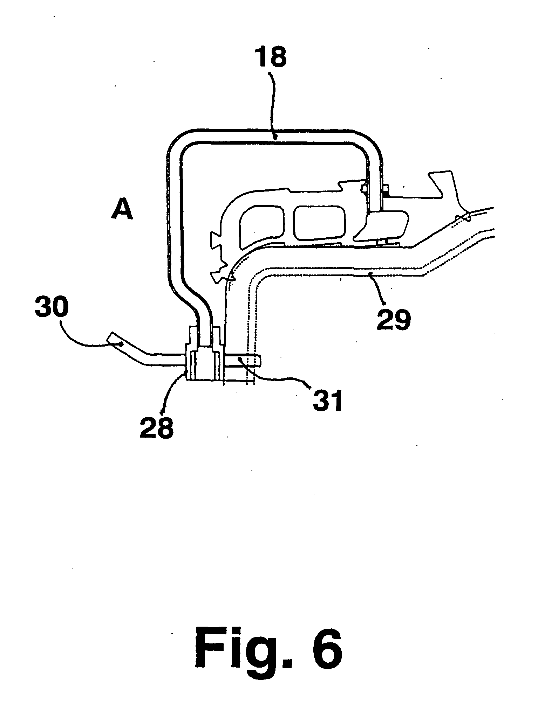

Fig. 6 zeigt anhand des im wesentlichen gleichen Dichtringes **8'** gemäß Fig. 5, jedoch unter Bezug auf ein Schachtbauwerk gemäß Fig. 1, Details des ersten Leitungsbereiches A der Anschlussleitung **18.** Dieser Leitungsbereich als integriertes Teil der Muffe ist ein Rohr mit mehrfachem Richtungswechsel. An seinem freien Ende ist ein Kupplungsgehäuse **28** mit einer Aufnahmenut in Form einer Steck- oder Gewindenut angeordnet, in die das korrespondierende Kupplungsteil des zweiten Leitungsbereiches B der Anschlussleitung (hier nicht eingezeichnet) einrastet bzw. eingeschraubt werden kann. Während des Einbetonierens des Dichtringes **8'** und der Anschlussleitung **18** in die Muffe mittels der Untermuffe **29** ist die Aufnahmenut des Kupplungsgehäuses **28** mit einer Kappe verschlossen. Zwecks zusätzlicher Befestigung ist das Kupplungsgehäuse mittels eines Verankerungsfußes **30** in der Muffe integriert. Da die Kappe nach dem Betoniervorgang in der Regel mit einer Betonschicht verdeckt ist, ist das Kupplungsgehäuse zusätzlich mit einem Markierungselement **31,** beispielsweise mit einem Markierungsstift, versehen, so dass die Aufnahmenut des Kupplungsgehäuses leicht lokalisiert und für den Kupplungsvorgang freigelegt werden kann.

### Bezugszeichenliste

- **1**: Dichtanordnung
- **1'**: Dichtanordnung
- **2**: Spitzende
- **3**: Muffe
- **4**: Muffengrund
- **5**: Muffenspiegel
- **6**: Ringspalt (Muffenspalt)
- **7**: Freiraum
- **8**: Dichtring
- **8'**: Dichtring
- **9**: Basisbereich des Dichtringes
- **10**: Kontaktbereich des Dichtringes
- **11**: Verankerungsfuß
- **12**: erster Dichtbereich
- **13**: zweiter Dichtbereich
- **14**: Prüfraum
- **15**: Bohrungen
- **16**: Ringnut
- **17**: mediumdurchlässiges und/oder komprimierbares Material
- **18**: Anschlussleitung
- **18a**: erste Anschlussleitung
- **18b**: zweite Anschlussleitung
- **19**: Abdeckband
- **20**: zusätzlicher Verankerungsfuß
- **21**: zusätzliche Ringkanäle
- **22**: Behälter mit Prüfmedium
- **23**: Schlauch
- **24**: Ventil
- **25**: Messgerät
- **26**: Abzweigbereich
- **27**: Trennschicht
- **28**: Kupplungsgehäuse mit Aufnahmenut
- **29**: Untermuffe
- **30**: Verankerungsfuß
- **31**: Markierungselement
- **A**: erster Leitungsbereich (in der Muffe intergiert)
- **B**: freier zweiter Leitungsbereich
- **C**: Bereich der Trennschicht

## Patentansprüche

1. Einrichtung zum Prüfen auf Dichtigkeit einer Dichtanordnung (1,1') von Rohren oder Schachtbauwerken, umfassend:
- zwei aneinanderstoßende Bauteile in Form einer Muffe (3) und eines Spitzendes (2) unter Bildung eines Ringspaltes (6); und
- einen Dichtring (8, 8') aus elastomerem Wertstoff, der den Ringspalt (6) abdichtend überbrückt, umfassend wiederum einen Basisbereich (9), der mit wenigstens einem Verankerungsfuß ausgestattet ist, mit dessen Hilfe eine dauerhafte Befestigung in der Muffe (3) erfolgt; sowie einen gegenüberliegenden Kontaktbereich (10) zum Spitzende (2);
**dadurch gekennzeichnet, dass**
- der Dichtring (8, 8') einen ersten und zweiten Dichtbereich (12, 13) aufweist, wobei die beiden Dichtbereiche einen ringförmigen Prüfraum (14) umschließen;
- der Basisbereich (9) des Dichtringes (8, 8') mit einer Ringnut (16) ausgestattet ist, die mit einem mediumdurchlässigen und/oder komprimierbaren Material (17) vollständig ausgefüllt ist;
- umlaufend mehrere in Abständen angeordnete Bohrungen (15) vorhanden sind, die vom Kontaktbereich (10) des Dichtringes (8, 8') zur Ringnut (16) verlaufen und dabei den Prüfraum (14) verbinden; und dass
- wenigstens eine Anschlussleitung (18) vorhanden ist, die mit einem Behälter (22) verbunden ist, der wiederum mit einem Prüfmedium gefüllt ist, mit dessen Hilfe ein Druck aufbaubar ist, der die Bohrungen (15), die Ringnut (16) und den Prüfraum (14) erfasst; und die ferner mit einem Ventil (24) sowie einem Messgerät (25) in Verbindung steht, wobei mittels des Messgerätes Sollwertabweichungen hinsichtlich der Dichtleistung erfassbar sind.

2. Einrichtung nach Anspruch 1, **dadurch gekennzeichnet, dass** die Anschlussleitung (18) zwei Leitungsbereiche (A, B) umfasst, wobei
- der erste Leitungsbereich (A) in der Muffe (3) integriert ist, und zwar mit direktem Anschluss an die Ringnut (16); und
- der freie zweite Leitungsbereich (B) Anschluss an den Behälter (22), das Ventil (24) und das Messgerät (25) hat.

3. Einrichtung nach Anspruch 1 oder 2, **dadurch gekennzeichnet, dass** zwei Anschlussleitungen (18) vorhanden sind, wobei
- die erste Anschlussleitung (18a) mit dem Behälter (22) verbunden ist; und
- die zweite Anschlussleitung (18b) mit dem Ventil (24) und dem Messgerät (25) in Verbindung steht.

4. Einrichtung nach Anspruch 2 und 3, **dadurch gekennzeichnet, dass** die beiden Anschlussleitungen (18) innerhalb ihres ersten Leitungsbereiches (A) im etwa gleichen Abstand zueinander angeordnet sind, wobei die erste Anschlussleitung . (18a) mit Verbindung zum Behälter (22) unten zum Liegen kommt, während die zweite Anschlussleitung (18b) mit Verbindung zum Ventil (24) und Messgerät (25) oben vorhanden ist, wobei das Prüfmedium in beide Richtungen förderbar ist.

5. Einrichtung nach Anspruch 2 und 3, **dadurch gekennzeichnet, dass** die beiden Anschlussleitungen (18) innerhalb ihres ersten Leitungsbereiches (A) oben angeordnet sind und dabei dicht nebeneinander zum Liegen kommen, wobei der Dichtring (8, 8') im Bereich (C) zwischen der ersten und zweiten Anschlussleitung (18a, 18b) mit einer Trennschicht (27) versehen ist, die den Prüfraum (14) und die Ringnut (16) partiell verschließt, so dass über die erste Anschlussleitung (18a) mit Verbindung zum Behälter (22) das Prüfmedium nur in eine Richtung förderbar ist.

6. Einrichtung nach einem der Ansprüche 2 bis 5, **dadurch gekennzeichnet, dass** der erste Leitungsbereich (A) als integriertes Teil der Muffe (3) eine Bohrung ist, die senkrecht oder schräg verläuft.

7. Einrichtung nach einem der Ansprüche 2 bis 5, **dadurch gekennzeichnet, dass** der erste Leitungsbereich (A) als integriertes Teil der Muffe (3) ein Rohr ist, das senkrecht, schräg, ein- oder mehrfach gewinkelt oder gekrümmt verläuft.

8. Einrichtung nach einem der Ansprüche 2 bis 7, **dadurch gekennzeichnet, dass** der freie zweite Leitungsbereich (B) ein Schlauch (23) ist.

9. Einrichtung nach einem der Ansprüche 2 bis 8, **dadurch gekennzeichnet, dass** der freie zweite Leitungsbereich (B) ein Abzweigbereich (26) aufweist, und zwar mit Verbindung zum Ventil (24) einerseits und zum Messgerät (25) andererseits.

10. Einrichtung nach einem der Ansprüche 2 bis 9, **dadurch gekennzeichnet, dass** der erste Leitungsbereich (A) mittels einer Kupplung, umfassend ein Kupplungsgehäuse (28) mit Aufnahmenut für das korrespondierende Kupplungsteil, in den zweiten Leitungsbereich (B) übergeht.

11. Einrichtung nach Anspruch 10, **dadurch gekennzeichnet, dass** das Kupplungsgehäuse (28) mittels eines Verankerungsfußes (30) in der Muffe (3) integriert ist.

12. Einrichtung nach Anspruch 10 oder 11, **dadurch gekennzeichnet, dass** das Kupplungsgehäuses (30) mit einem Markierungselement (31) versehen ist.

13. Einrichtung nach einem der Ansprüche 1 bis 12, **dadurch gekennzeichnet, dass** das Material (17) für die Ringnut (16) als Schaumstoff mit vorzugsweise elastischen Eigenschaften ausgebildet ist.

14. Einrichtung nach Anspruch 13, **dadurch gekennzeichnet, dass** das Material (17) für die Ringnut (16) aus Moosgummi besteht.

15. Einrichtung nach einem der Ansprüche 1 bis 14, **dadurch gekennzeichnet, dass** das Material (17) für die Ringnut (16) als einlegbarer Streifen ausgebildet ist.

16. Einrichtung nach einem der Ansprüche 1 bis 15, **dadurch gekennzeichnet, dass** die mit dem Prüfraum (14) in Verbindung stehenden Bohrungen (15) in einem Abstand von etwa 100 mm zueinander angeordnet sind.

17. Einrichtung nach einem der Ansprüche 1 bis 16, **dadurch gekennzeichnet, dass** die mit dem Prüfraum (14) in Verbindung stehenden Bohrungen (15) innerhalb des Kontaktbereiches (10) des Dichtringes (8, 8') mit einem Abdeckband (19), das vorzugsweise selbstklebend ist, verschlossen sind, wobei das Abdeckband vor der Montage der aneinanderstoßenden Bauteile entfernt wird.

18. Einrichtung nach einem der Ansprüche 1 bis 17, **dadurch gekennzeichnet, dass** das Prüfmedium flüssig und/oder gasförmig ist.

19. Einrichtung nach Anspruch 18, insbesondere in Verbindung mit Anspruch 3, **dadurch gekennzeichnet, dass** das Prüfmedium flüssig ist.

20. Einrichtung nach Anspruch 18 oder 19, **dadurch gekennzeichnet, dass** das Prüfmedium Wasser ist.

21. Einrichtung nach einem der Ansprüche 1 bis 20, **dadurch gekennzeichnet, dass** nach der Druckprüfung noch eine Vakuumprüfung erfolgt.

## Claims

1. An apparatus for testing a seal arrangement (1, 1') of pipes or shaft structures for tightness, comprising:
- two abutting components in the form of a socket (3) and a tapered end (2) to form an annular gap (6); and
- a sealing ring (8, 8') made of elastomeric material, which bridges the annular gap (6) to form a seal, in turn comprising a base area (9), which is equipped with at least one anchoring base, with the aid of which permanent fastening in the socket (3) occurs; and a diametrically opposite contact area (10) to the tapered end (2) ;
**characterized in that**
- the sealing ring (8, 8') has a first and a second sealing area (12, 13), the two sealing areas enclosing an annular testing chamber (14);
- the base area (9) of the sealing ring (8, 8') is equipped with an annular groove (16), which is completely filled with a material (17), which is permeable to medium and/or is compressible;
- multiple holes (15) situated at intervals are provided peripherally, which run from the contact area (10) of the sealing ring (8, 8') to the annular groove (16) and connect the testing chamber (14) at the same time; and that
- at least one connection line (18) is provided, which is connected to a container (22), which is in turn filled with a testing medium, with the aid of which a pressure can be built up, which comprises the holes (15), the annular groove (16), and the testing chamber (14); and which is also connected to a valve (24) and a measuring device (25), target value deviations in regard to the sealing performance being detectable using the measuring device.

2. The apparatus according to Claim 1, **characterized in that** the connection line (18) comprises two line areas (A, B),
- the first line area (A) being integrated in the socket (3), and with direct connection to the annular groove (16); and
- the free second line area (B) having a connection to the container (22), the valve (24), and the measuring device (25).

3. The apparatus according to Claim 1 or 2, **characterized in that** two connection lines (18) are provided,
- the first connection line (18a) being connected to the container (22); and
- the second connection line (18b) being connected to the valve (24) and the measuring device (25).

4. The apparatus according to Claims 2 and 3, **characterized in that** the two connection lines (18) are situated inside their first line area (A) at approximately equal intervals to one another, the first connection line (18a), having a connection to the container (22), coming to rest on the bottom, while the second connection line (18b), having a connection to the valve (24) and the measuring device (25), being provided on top, the testing medium being able to be conveyed in both directions.

5. The apparatus according to Claims 2 and 3 **characterized in that** the two connection lines (18) are situated on top within their first line area (A), and come to rest tightly adjacent to one another, the sealing ring (8, 8') being provided in the area (C) between the first and second connection lines (18a, 18b) with a partition layer (27), which partially closes the testing chamber (14) and the annular groove (16), so that via the first connection line (18a), which has a connection to the container (22), the testing medium can only be conveyed in one direction.

6. The apparatus according to one of Claims 2 through 5, **characterized in that** the first line area (A) is a hole, as an integrated part of the socket (3), which runs perpendicularly or diagonally.

7. The apparatus according to one of Claims 2 through 5, **characterized in that** the first line area (A), as an integrated part of the socket (3), is a pipe which runs perpendicularly, diagonally, or angled or curved once or multiple times.

8. The apparatus according to one of Claims 2 through 7, **characterized in that** the free second line area (B) is a hose (23).

9. The apparatus according to one of Claims 2 through 8, **characterized in that** the free second line area (B) has a branch area (26), having a connection to the valve (24) on one side and to the measuring device (25) on the other side.

10. The apparatus according to one of Claims 2 through 9, **characterized in that** the first line area (A) merges into the second line area (B) using a coupling, comprising a coupling housing (28) having a receptacle groove for the corresponding coupling part,.

11. The apparatus according to Claim 10, **characterized in that** the coupling housing (28) is integrated in the socket (3) using an anchoring base (30).

12. The apparatus according to Claim 10 or 11, **characterized in that** the coupling housing (30) is provided with a marking element (31).

13. The apparatus according to one of Claims 1 through 12, **characterized in that** the material (17) for the annular groove (16) is implemented as a foam, preferably having elastic properties.

14. The apparatus according to Claim 13, **characterized in that** the material (17) for the annular groove (16) comprises foam rubber.

15. The apparatus according to one of Claims 1 through 14, **characterized in that** the material (17) for the annular groove (16) is implemented as strips which can be inlaid.

16. The apparatus according to one of Claims 1 through 15, **characterized in that** the holes (15) connected to the testing chamber (14) are situated at an interval of approximately 100 mm to one another.

17. The apparatus according to one of Claims 1 through 16, **characterized in that** the holes (15) connected to the testing chamber (14) are closed inside the contact area (10) of the sealing ring (8, 8') using a cover band (19), which is preferably self-adhesive, the cover band being removed before the assembly of the abutting components.

18. The apparatus according to one of Claims 1 through 17, **characterized in that** the testing medium is liquid and/or gaseous.

19. The apparatus according to Claim 18, in particular in connection with Claim 3, **characterized in that** the testing medium is liquid.

20. The apparatus according to Claim 18 or 19, **characterized in that** the testing medium is water.

21. The apparatus according to one of Claims 1 through 20, **characterized in that** a vacuum test is also performed after the pressure test.

## Revendications

1. Système pour le contrôle de l'étanchéité d'un dispositif d'étanchéité (1, 1') pour tuyaux ou puits, comprenant :
- deux éléments de construction contigus en forme de manchon (3) et d'extrémité de pointe (2) formant une fente annulaire (6) ; et
- une bague d'étanchéité (8, 8') en matière élastomère couvrant la fente annulaire (6) de façon étanche, comprenant une région de base (9) pourvue d'au moins un pied d'ancrage permettant de créer une fixation durable dans le manchon (3) ; ainsi qu'une région de contact (10) opposée, en contact avec l'extrémité de pointe (2) ;
**caractérisé en ce que**
- la bague d'étanchéité (8, 8') comporte une première et une deuxième région d'étanchéité (12, 13), les deux régions d'étanchéité encerclant une chambre de contrôle annulaire (14) ;
- la région de base (9) de la bague d'étanchéité (8, 8') est pourvue d'une rainure annulaire (16) entièrement remplie d'un matériau (17) perméable au fluide et/ou compressible ;
- plusieurs perçages périphériques (15) espacés entre eux sont prévus, s'étendant de la région de contact (10) de la bague d'étanchéité (8, 8') jusqu'à la rainure annulaire (16) tout en reliant la chambre de contrôle (14) ; et **en ce que**
- il est prévu au moins une conduite de raccordement (18) reliée à un récipient (22), lui-même rempli d'un fluide de contrôle, à l'aide duquel une pression peut être établie, détectant les perçages (15), la rainure annulaire (16) et la chambre de contrôle (14); ladite conduite étant en outre reliée à une soupape (24) ainsi qu'à un appareil de mesure (25), les écarts des performances d'étanchéité par rapport aux valeurs de consigne pouvant être détectés au moyen de l'appareil de mesure.

2. Système selon la revendication 1, **caractérisé en ce que** la conduite de raccordement (18) comprend deux régions de conduite (A, B), où
- la première région de conduite (A) est intégrée dans le manchon (3), notamment en raccordement direct à la rainure annulaire (16) ; et
- la deuxième région de conduite libre (B) est raccordée au récipient (22), à la soupape (24) et à l'appareil de mesure (25).

3. Système selon l'une des revendications 1 ou 2, **caractérisé en ce qu**'il est prévu deux conduites de raccordement (18), où
- la première conduite de raccordement (18a) est reliée au récipient (22) ; et
- la deuxième conduite de raccordement (18b) est reliée à la soupape (24) et à l'appareil de mesure (25).

4. Système selon les revendications 2 et 3, **caractérisé en ce que** les deux conduites de raccordement (18) sont disposées avec quasiment le même espacement l'une par rapport à l'autre dans la première région de conduite (A), la première conduite de raccordement (18a) reliée au récipient (22) se trouvant en bas, tandis que la deuxième conduite de raccordement (18b), reliée à la soupape (24) et à l'appareil de mesure (25), se trouve en haut, le fluide de contrôle pouvant être transporté dans les deux directions.

5. Système selon les revendications 2 et 3, **caractérisé en ce que** les deux conduites de raccordement (18) sont disposées en haut dans la première région de conduite (A) et sont étroitement serrées l'une à côté de l'autre, la bague d'étanchéité (8, 8') étant, dans la région (C) entre la première et la deuxième conduite de raccordement (18a, 18b), pourvue d'une couche séparatrice (27) fermant partiellement la chambre de contrôle (14) et la rainure annulaire (16), de sorte que le fluide ne peut être transporté que dans une seule direction, par le biais de la première conduite de raccordement (18) reliée au récipient (22).

6. Système selon l'une des revendications 2 à 5, **caractérisé en ce que** la première région de conduite (A) en tant que partie intégrante du manchon (3) est un perçage s'étendant verticalement ou en biais.

7. Système selon l'une des revendications 2 à 5, **caractérisé en ce que** la première région de conduite (A) en tant que partie intégrante du manchon (3) est un tuyau s'étendant verticalement, en biais, avec un(e) ou plusieurs coudes ou courbes.

8. Système selon l'une des revendications 2 à 7, **caractérisé en ce que** la deuxième région de conduite libre (B) est un tuyau flexible (23).

9. Système selon l'une des revendications 2 à 8, **caractérisé en ce que** la deuxième région de conduite (B) comporte une région de bifurcation, notamment en liaison avec la soupape (24) d'une part et l'appareil de mesure (25) d'autre part.

10. Système selon l'une des revendications 2 à 9, **caractérisé en ce que** la première région de conduite (A) passe à la deuxième région de conduite (B) au moyen d'un élément d'accouplement comprenant un boîtier d'élément d'accouplement (28) avec une rainure d'accueil pour l'élément d'accouplement correspondant.

11. Système selon la revendication 10, **caractérisé en ce que** le boîtier d'élément d'accouplement (28) est intégré dans le manchon (3) au moyen d'un pied d'ancrage (30).

12. Système selon l'une des revendications 10 ou 11, **caractérisé en ce que** le boîtier d'élément d'accouplement (30) est pourvu d'un élément de marquage (31).

13. Système selon l'une des revendications 1 à 12, **caractérisé en ce que** le matériau (17) utilisé pour la rainure annulaire (16) est conçu comme une mousse synthétique présentant de préférence des propriétés élastiques.

14. Système selon la revendication 13, **caractérisé en ce que** le matériau (17) utilisé pour la rainure annulaire (16) est constitué de caoutchouc spongieux.

15. Système selon l'une des revendications 1 à 14, **caractérisé en ce que** le matériau (17) utilisé pour la rainure annulaire (16) est conçu comme une bande insérable.

16. Système selon l'une des revendications 1 à 15, **caractérisé en ce que** les perçages (15) reliés à la chambre de contrôle (14) sont disposés avec un espacement d'environ 100 mm les uns par rapport aux autres.

17. Système selon l'une des revendications 1 à 16, **caractérisé en ce que** les perçages (15) reliés à la chambre de contrôle (14) sont fermés dans la région de contact (10) de la bague d'étanchéité (8, 8'), par une bande couvrante (19) de préférence autocollante, la bande autocollante étant retirée avant le montage des éléments de construction contigus.

18. Système selon l'une des revendications 1 à 17, **caractérisé en ce que** le fluide de contrôle est liquide et/ou gazeux.

19. Système selon la revendication 18, en particulier en rapport avec la revendication 3, **caractérisé en ce que** le fluide de contrôle est liquide.

20. Système selon l'une des revendications 18 ou 19, **caractérisé en ce que** le fluide de contrôle est de l'eau.

21. Système selon l'une des revendications 1 à 20, **caractérisé en ce qu'**un contrôle sous vide est également effectué après le contrôle sous pression.
